# EUROPÄISCHE PATENTSCHRIFT

(11) **EP 4 067 079 B1**
(45) Veröffentlichungstag und Bekanntmachung des Hinweises auf die Patenterteilung: **23.10.2024**
(21) Anmeldenummer: 22174809.8
(22) Anmeldetag: 13.11.2019
(51) Int. Cl.: B32B 37/00, B32B 41/00

(54) **VERFAHREN ZUM ANLERNEN UND/ODER BETREIBEN EINER KASCHIERVORRICHTUNG**
METHOD FOR TEACHING AND/OR OPERATING A LAMINATING DEVICE
PROCÉDÉ D'APPRENTISSAGE ET/OU DE FONCTIONNEMENT D'UN DISPOSITIF DE CONTRECOLLAGE

(30) Priorität: 13.11.2018 DE 102018128460
(43) Veröffentlichungstag der Anmeldung: 05.10.2022
(62) Teilanmeldung aus: 19835599.2
(73) Patentinhaber: Lisa Dräxlmaier GmbH, 84137 Vilsbiburg (DE)
(72) Erfinder: Jung, Andreas, 83410 Laufen (DE); Rehrl, Hubert, 83317 Teisendorf (DE)

(56) Entgegenhaltungen:
- WO-A1-00/67991
- WO-A1-2017/215684
- US-A1- 2017 320 310
- P. KOPACEK: "Computer Aided Development for Robot Control", 31 December 1989 (1989-12-31), pages 39 - 45, XP055665114, Retrieved from the Internet <URL:https://books.google.de/books?id=I9bSBQAAQBAJ&pg=PA45&lpg=PA45&dq=control+gripper+robot+cad+data&source=bl&ots=4n7KOFgBcr&sig=ACfU3U2wdr_qdm6w5m-M1WuT9BtNI6lT5w&hl=de&sa=X&ved=2ahUKEwj649Stm7jnAhWQVxUIHcCiBP0Q6AEwBXoECAoQAQ#v=onepage&q=control%20gripper%20robot%20cad%20data&f=false> [retrieved on 20200204]
- ANONYMOUS: "ARTIST STUDIO Software - Cevotec GmbH", 17 March 2018 (2018-03-17), XP055665240, Retrieved from the Internet <URL:https://web.archive.org/web/20180317230142/http://cevotec.com:80/artist-studio-software/> [retrieved on 20200205]
- ANONYMOUS: "An integrated CAD/CAM system for automated composite manufacture | Request PDF", 31 August 1996 (1996-08-31), XP055665251, Retrieved from the Internet <URL:https://www.researchgate.net/publication/223519539_An_integrated_CADCAM_system_for_automated_composite_manufacture> [retrieved on 20200205]
- THE ROBOT REPORT STAFF: "New Scale Robotics introduces precision gripper for cobots By The Robot Report Staff |", 31 August 2018 (2018-08-31), XP055679691, Retrieved from the Internet <URL:https://www.therobotreport.com/new-scale-robotics-precision-gripper/> [retrieved on 20200325]
- VIRGINIA FRANKE KLEIST ET AL: "Building Technologically Based Online Trust: Can the Biometrics Industry Deliver the Online Trust Silver Bullet?", INFORMATION SYSTEMS MANAGEMENT, 2 October 2007 (2007-10-02), Abingdon, pages 319 - 329, XP055554187, Retrieved from the Internet <URL:https://www.researchgate.net/publication/220630220_Building_Technologically_Based_Online_Trust_Can_the_Biometrics_Industry_Deliver_the_Online_Trust_Silver_Bullet> DOI: 10.1080/10580530701586045
- OLIVIER GRENIER-LAFOND: "Program a Robot, No Training Required, Thanks to Robotiq's New Software", 15 June 2016 (2016-06-15), XP055679620, Retrieved from the Internet <URL:https://blog.robotiq.com/program-a-robot-no-training-required-thanks-to-robotiqs-new-software> [retrieved on 20200325]
- CARLOS A JARA ET AL: "An augmented reality interface for training robotics through the web", PROCEEDINGS OF THE 40TH INTERNATIONAL SYMPOSIUM ON ROBOTICS. BARCELONA : AER-ATP, MARCH 10 - 13, 2009,, 10 March 2009 (2009-03-10), pages 189 - 194, XP002698774
- JARA CARLOS: "An augmented reality interface for training robotics through the web - CORE", 1 January 2009 (2009-01-01), pages 1 - 5, XP055930844, Retrieved from the Internet <URL:https://core.ac.uk/display/16363383?utm_source=pdf&utm_medium=banner&utm_campaign=pdf-decoration-v1> [retrieved on 20220614]
- JARA CARLOS: "An augmented reality interface for training robotics through the web - CORE", 1 January 2009 (2009-01-01), pages 1 - 5, XP055930844, Retrieved from the Internet <URL:https://core.ac.uk/display/16363383?utm_source=pdf&utm_medium=banner&utm_campaign=pdf-decoration-v1> [retrieved on 20220614]
- FANUC AMERICA CORPORATION: "Hand Guidance Feature for FANUC CR-35iA Collaborative Robot", 4 March 2016 (2016-03-04), XP093094986, Retrieved from the Internet <URL:https://www.youtube.com/watch?v=A5_JjV564EA> [retrieved on 20231025]
- UNKNOWN: "Collaborative robot hand guidance function", 9 July 2017 (2017-07-09), pages 1 - 2, XP093094990, Retrieved from the Internet <URL:https://web.archive.org/web/20170709101849/https://www.fanuc.eu/de/en/robots/accessories/hand-guidance> [retrieved on 20231025]

## Beschreibung

Die Erfindung betrifft ein Verfahren zum Anlernen einer Kaschiervorrichtung zum Kaschieren eines Folienelements auf einem Trägerteil.

Speziell gattungsgemäße Verfahren sowie Vorrichtungen zum Kaschieren eines Folienelements sind aus dem Stand der Technik bereits bekannt.

So sind beispielsweise aus der WO 2017/215684 A1 ein Verfahren und eine Vorrichtung zum Kaschieren eines Folienelements auf einem Trägerteil bekannt. Die dortige Vorrichtung weist unter anderem eine Vielzahl an Greifern zum Greifen des Folienelements auf, wobei die Greifer mehraxial verlagerbar sind, um das Folienteil präziser an die Kontur eines zu kaschierenden Bauteils anpassen zu können. Ein weiteres Verfahren ist aus der US2017/320310 A1 bekannt.

Der Erfindung liegt die Aufgabe zugrunde, insbesondere gattungsgemäße Verfahren weiterzuentwickeln. Insbesondere ist es eine Aufgabe der Erfindung Folienmaterial einzusparen. Ferner ist es eine weitere Aufgabe der Erfindung ein Folienelement verzugsfreier aufkaschieren zu können.

Für das Verständnis der Erfindung nützlich jedoch nicht erfindungsgemäß ist die Bereitstellung eines Verfahrens zum Anlernen eines Verfahrens und/oder einer Vorrichtung zum Kaschieren eines Folienelements auf einem Trägerteil, bei welchem designierte Bahnstrecken, insbesondere designierte Bahnkurven, entlang welcher Greifer zum Greifen des Folienelements später zum Kaschieren des Folienelements verfahren werden, mittels CAD-Daten des Trägerteils und/oder des Folienelements ermittelt und angelernt werden.

Dadurch können für Greifer beim Kaschieren des Folienelements auf das Trägerteil später abzufahrende Bahnstrecken bzw. Bahnkurven äußerst präzise eingestellt werden, so dass auch das Trägerteil entsprechend äußerst präzise mit dem Folienelement kaschiert werden kann.

Mittels des nicht erfindungsgemäßen Verfahrens werden für einen Kaschiervorgang erforderliche Bahnstrecken bzw. Bahnkurven in Abhängigkeit von entsprechenden CAD-Daten ermittelt und angelernt.

Ferner können vorliegend besonders exakte Bewegungen und/oder Positionierungen von Greifern gegenüber dem Trägerteil und auch weiteren Komponenten eines Kaschierwerkzeugs, wie etwa einer Trägerteilaufnahme, einer Dichteinrichtung einer Druckdifferenzeinrichtung, einer Stanzeinrichtung oder dergleichen, simuliert und bestimmt werden.

Kumulativ oder alternativ können geeignete Daten zum Erzeugen und Anlernen von designierten Bahnstrecken bzw. Bahnkurven auch auf Basis von Daten, insbesondere CAD-Daten, eines Kaschierwerkzeugs erzeugt und angelernt werden.

Es versteht sich, dass für das nicht erfindungsgemäße Verfahren geeignete Daten, wie eben CAD-Daten, unterschiedlichst bereitgestellt werden können. Vorteilhaftweise stehen hierfür entsprechende Schnittstellen an einer Kaschiervorrichtung, insbesondere an einer Vakuumkaschiervorrichtung, für das Verfahren zur Verfügung, um die erforderlichen Daten dort verarbeiten, insbesondere elektronisch aus- bzw. einlesen zu können.

Besonders zweckmäßig ist es, wenn die CAD-Daten wenigstens einen Datensatz zu einer Gestalt, insbesondere einer Kontur, wie beispielsweise einer Abwicklung zu einer zu kaschierenden Oberfläche, des Trägerteils umfassen. Derartige Datensätze des Trägerteils, insbesondere Daten zu einer hiermit im Zusammenhang stehenden Freiformoberfläche, welches zu kaschieren ist, ermöglichen hierbei die Generation von besonders exakten Bahnstrecken bzw. Bahnkurven für die Greifer.

Insofern sieht eine sehr vorteilhafte Verfahrensvariante vor, dass designierte Bahnstrecken bzw. Bahnkurven in Abhängigkeit von einer Gestalt, einer Kontur, einer Abwicklung einer zu kaschierenden Oberfläche, einer Freiformoberfläche oder dergleichen ermittelt werden.

Kumulativ oder alternativ können sich die designierten Bahnstrecken bzw. Bahnkurven auch auf CAD-Daten des Folienelements stützen, insbesondere auf entsprechende Daten zu der Außenkontur bzw. Randkontur des Folienelements.

Insofern ist es vorteilhaft, wenn designierte Bahnstrecken, insbesondere designierte Bahnkurven, in Abhängigkeit von einer Gestalt, insbesondere von einer Außenkontur bzw. einer Randkontur, des Folienelements ermittelt und angelernt werden.

Unter dem Begriff "CAD-Daten" werden im Sinne der Erfindung jegliche elektronisch verarbeitbaren Daten verstanden, welche verwertbare Informationen zum Erzeugen und insbesondere zum Anlernen von designierten Bahnstrecken bzw. Bahnkurven beinhalten und bereitstellen können. Insbesondere fallen hierunter Daten eines rechnergestützten geometrischen Modells oder dergleichen, insbesondere auch 3D-CAD-Daten.

Der Begriff "Bahnstrecke bzw. Bahnkurve" beschreibt hierbei im Wesentlichen wenigstens eine Linie entlang, welcher sich Greifer zum Greifen eines Folienelements an einer Kaschiervorrichtung bewegen können. Insofern handelt es sich bei der vorliegenden Bahnstrecke bzw. Bahnkurve um Kaschierbahnstrecken- bzw. -kurven, entlang welcher Kaschierfolien-Greifer zum späteren Kaschieren entlang bewegbar sind.

In einem einfachen Fall formuliert eine einzige Linie bzw. Bahnlinie etwa eine im Wesentlichen eindimensionale Bahnstrecke bzw. Bahnkurve, welche sich mit einer Längserstreckung in Richtung des Linienverlaufs erstreckt. In diesem Fall besitzt diese einfache Linie eine im Wesentlichen eindimensionale Ausdehnungskomponente in Längserstreckung.

Beispielsweise bezieht sich die Linie bzw. die Bahnstrecke bzw. Bahnkurve auf den Schwerpunkt eines Greifers.

Eine im Sinne der Erfindung erzeugte bzw. angelernte Bahnstrecke bzw. Bahnkurve kann hinsichtlich einer linienhaften Längserstreckung präziser aber auch eine zusätzliche Querausdehnung aufweisen und insofern eine zweidimensionale Ausdehnungskomponente besitzen.

Im Sinne der Erfindung ist eine Linie bevorzugt durch eine Querausdehnung quer zu ihrer Längserstreckung realisiert, wodurch eine Ebene ausgebildet ist, entlang welcher sich ein Greifer im Raum bewegen kann.

Alternativ kann eine Bahnstrecke bzw. Bahnkurve aber auch durch eine Vielzahl an Linien formuliert sein, welche in Bezug auf ihre Längserstreckungen nebeneinander angeordnet sind, um geeignete Bahnebenen bezüglich der Erfindung zu realisieren.

An dieser Stelle sei insofern darauf hingewiesen, dass die Begriffe "Bahnstrecke bzw. Bahnkurve" neben Bahnlinien auch entsprechende Bahnebenen formulieren können. Eine Bahnstrecke bzw. Bahnkurve kann vorliegend besonders vorteilhaft mittels Matrix-Daten ermittelt und angelernt werden, welche Informationen zu dreidimensionalen Raumorientierung bereitstellen.

Mit dem Begriff "designiert" sind im Sinne der Erfindung jegliche zukünftige Greiferbahnbewegungen beschrieben, mittels welchen bzw. entlang welchen Greifer für einen späteren Kaschierprozess verfahren werden können. Dies können insbesondere designierte Bahnstrecken, Bahnkurven, Bahnlinien, Bahnebenen usw. sein.

Der Begriff "Anlernen" beschreibt im Sinne der Erfindung einen Vorgang, insbesondere bezüglich eines Kaschierverfahrens bzw. einer Kaschiervorrichtung, bei welchem einzelne oder bevorzugt alle an einem Kaschierprozess beteiligten Greifer außerhalb eines automatisierten Kaschiervorgangs vorab entlang designierter Bahnstrecken bzw. Bahnkurven geführt werden.

Mit anderen Worten bedeutet dies, dass die Greifer hierbei durch menschliche Interaktion geführt werden können.

Durch die vorliegende Erfindung können auf denkbar einfache Weise designierte Bahnstrecken bzw. Bahnkurven in einer Steuerung oder dergleichen eingetragen, vorzugsweise gespeichert und darüber hinaus dauerhaft oder zeitlich zumindest beliebig lange in der Steuerung hinterlegt werden.

Für das Verständnis der Erfindung nützlich jedoch nicht erfindungsgemäß ist auch die Bereitstellung eines Verfahrens zum Anlernen eines Verfahrens und/oder einer Vorrichtung zum Kaschieren eines Folienelements auf einem Trägerteil, bei welchem designierte Bahnstrecken, insbesondere designierte Bahnkurven, entlang welcher Greifer zum Greifen des Folienelements später zum Kaschieren des Folienelements verfahren werden, mittels einzelner Raumkoordinaten angelernt werden.

Kumulativ oder alternativ können einzelne Raumkoordinaten bereitgestellt werden, auf welchen sich die designierten Bahnstrecken bzw. Bahnkurven teilweise oder zur Gänze stützen.

Durch derartige eingegebene Raumkoordinaten können designierte Bahnstrecken bzw. Bahnkurven zusätzlich individuell angepasst werden, etwa alternativ zu CAD-Daten oder kumulativ zu vorhandenen CAD-Daten.

Hierbei ist es beispielsweise möglich, eine oder mehrere auf Basis von CAD-Daten erzeugte designierte Bahnstrecken bzw. Bahnkurven zusätzlich noch durch hiervon unabhängige, vorzugsweise manuell eingegebene Raumkoordinaten zu manipulieren.

Der Begriff "Raumkoordinaten" beschreibt hierbei Orte an einer Kaschiervorrichtung, insbesondere an einer Vakuumkaschiervorrichtung, welche insbesondere unmittelbar neben einem Kaschierwerkzeug bzw. in einem Kaschierraum der Kaschiervorrichtung verortet sind.

Diese Raumkoordinaten können ortsfest verortet sein, aber auch in Abhängigkeit von der Zeit örtlich beweglich sein. Hierdurch lassen sich neben statisch bereitgestellten designierten Bahnstrecken bzw. Bahnkurven auch dynamisch veränderbare designierte Bahnstrecken bzw. Bahnkurven erzeugen.

Es ist vorteilhaft, wenn designierten Bahnstrecken, insbesondere designierten Bahnkurven, mittels wenigstens zwei oder mehr Raumkoordinaten, vorzugsweise mittels eines Anfangs- und Endpunktes und einer Vielzahl an dazwischen angeordneten Wegpunkten, erzeugt werden.

Zum Erzeugen und Anlernen von designierten Bahnstrecken bzw. Bahnkurven können bevorzugt mehrere Raumkoordinaten herangezogen werden. Je mehr solcher Raumkoordinaten eingegeben werden, um so exaktere designierte Bahnstrecken bzw. Bahnkurven können bereitgestellt werden.

Um mithilfe von derartigen Raumkoordinaten auch sich im Raum zweidimensional erstreckende designierte Bahnstrecken bzw. Bahnkurven erzeugen bzw. anlernen zu können, ist es ferner zweckmäßig, Raumkoordinaten nicht nur in Reihe hintereinander zu platzieren, sondern weitere Raumkoordinaten zusätzlich auch neben einer Reihe von Raumkoordinaten.

Bewegungen von Greifern können vorliegend noch vielfältiger im Raum abgebildet werden, wenn für die designierten Bahnstrecken bzw. Bahnkurven eine Schar von Raumkoordinaten verwendet wird, anhand welcher sogleich auch geeignete designierte Bahnkurven generiert werden können.

Werden die designierten Bahnstrecken, insbesondere die designierten Bahnkurven, mittels einzelner Raumkoordinaten interpoliert, können präzise Bahnstrecken bzw. Bahnkurven nach einer manuellen Eingabe einer ausreichenden Anzahl an Raumkoordinaten auch noch rechnergestützt nachgeschärft werden.

Etwaige Raumkoordinaten können an einer Kaschiervorrichtung bzw. einer Vorrichtungsperipherie hiervon auf verschiedene Weise eingegeben werden. Beispielsweise erfolgt eine derartige Eingabe von Raumkoordinaten als Zahleneingaben. Oder es werden direkt Orte an einer entsprechend aufbereiteten graphischen Darstellung einer Kaschiervorrichtung, insbesondere eines Kaschierraums hiervon, ausgewählt bzw. auf dem Eingabegerät angewählt.

Als besonders vorteilhaft hat es sich auch erwiesen, wenn die Raumkoordinaten mittels eines Eingabegerätes, insbesondere mittels eines händisch geführten Eingabegerätes, wie beispielsweise mittels einer graphischen Oberfläche eines Eingabegerätes, manuell eingegeben werden.

Kumulativ oder alternativ ist es vorteilhaft, wenn die designierten Bahnstrecken, insbesondere die designierten Bahnkurven, mittels einer händischen Gleit- bzw. Wischbewegung an und/oder vor einer graphischen Oberfläche eines Eingabegerätes angelernt werden. Auch hierdurch lassen sich einfach gewünschte Bahnstrecken bzw. Bahnkurven anlernen.

Die Aufgabe der Erfindung wird von einem Verfahren zum Anlernen einer Kaschiervorrichtung zum Kaschieren eines Folienelements auf einem Trägerteil gelöst, bei welchem designierte Bahnstrecken, insbesondere designierte Bahnkurven, entlang welcher Greifer zum Greifen des Folienelements, insbesondere wenigstens ein Greiferbackenelement hiervon, später zum Kaschieren des Folienelements verfahren werden, durch manuelle Betätigung von Greifern angelernt werden.

Kumulativ oder alternativ können Greifer auch manuell, also lediglich händisch, verlagert werden, um hierdurch geeignete designierte Bahnstrecken bzw. Bahnkurven anzulernen.

Insofern sieht eine weitere vorteilhafte Verfahrensvariante vor, dass die Greifer zu vorbestimmten Raumkoordinaten händisch hin geführt werden, wodurch die Bahnstrecken bzw. Bahnkurven dorthin individuell geführt und insofern festgelegt werden kann. Durch das vorliegende Anlernen können designierte Bahnstrecken bzw. Bahnkurven signifikant schneller und auch exakter generiert werden, als dies bisher durch reine Programmierungen bei Kaschierprozessen der Fall ist. Insbesondere entfallen vorliegend Anpassungsprogrammierungen, wenn bei Probeläufen festgestellt wird, dass Greiferbewegungen auf Basis zuvor erstellter Programmierungen nicht optimal verlaufen.

Denkbar ist auch die Bereitstellung eines Verfahrens zum Kaschieren eines Folienelements auf einem Trägerteil, bei welchem das Folienelement mittels Greifer gegriffen wird, und bei welchem Greifer jeweils entlang deren Bahnstrecken, insbesondere entlang deren Bahnkurven, motorisch verfahren werden, um das Folienelement für einen Kaschiervorgang gegenüber dem Trägerteil zu positionieren, wobei sich das Verfahren dadurch auszeichnet, dass Greifer zumindest teilweise einzeln oder kombiniert entlang jeweils designierter Bahnstrecken, insbesondere entlang designierter Bahnkurven, geführt werden, um designierte Bahnstrecken, insbesondere designierte Bahnkurven, anzulernen.

Dadurch, dass Greifer, insbesondere einer Kaschiervorrichtung, unabhängig eines Kaschierprozesses eine Anlernphase durchlaufen, können die entsprechenden Greifer sehr einfach an designierte Bahnstrecken angelernt werden.

Mittels des vorgeschlagenen Verfahrens, insbesondere auch in Kombination mit einem der übrigen vorgeschlagenen Verfahren, steht eine vorteilhafte Kaschierverfahrensvariante zur Verfügung, mittels welcher ein auf einem Trägerteil zu kaschierendes Folienelement derart verbessert mit dem Trägerteil in Wirkkontakt gebracht und anschließend aufkaschiert werden kann, dass hierdurch eine erhebliche Einsparung an Folienmaterial erreichbar ist.

Unter anderem liegt das auch daran, dass die Greifer bei einem späteren bzw. dem eigentlichen nachfolgenden Kaschierprozess das Folienelement enger an seinem Kaschierbereich greifen kann, wodurch Verschnitt an dem Randbereich des Folienelements signifikant reduziert werden kann.

Vorteilhafterweise kann vorliegend ein aufwendiger Programmiervorgang aus oftmals geschätzten Einzeldaten hinsichtlich von Greifern beim Kaschierprozess abzufahrende Bahnstrecken bzw. Bahnkurven wesentlich vereinfacht bzw. vorzugsweise zur Gänze entfallen, wodurch insbesondere ein Ein- oder Umrüsten eines Kaschierverfahrens bzw. einer Kaschiervorrichtung bei einem Produktwechsel signifikant vereinfacht werden kann.

Denkbar ist auch die Bereitstellung eines Verfahrens zum Ein- oder Umrüsten eines Kaschierverfahrens zum Kaschieren eines Folienelements und/oder einer Kaschiervorrichtung zum Kaschieren eines Folienelements mit Greifern zum Greifen des Folienelements, bei welchem zum Ein- oder Umrüsten bei dem Kaschierverfahren und/oder bei der Kaschiervorrichtung eingesetzten Greifern zumindest teilweise einzeln oder kombiniert jeweils entlang designierter Bahnstrecken, insbesondere entlang designierter Bahnkurven, geführt werden, um Bahnstrecken, insbesondere designierte Bahnkurven anzulernen.

Vorteilhafterweise können hierdurch designierte Bahnstrecken bzw. Bahnkurven vor einem Kaschieren eines Folienelements besonders einfach und effektiv angelernt werden, insbesondere in Integration eines Ein- oder Umrüstens.

Mittels des hier vorgeschlagenen weiteren Verfahrens steht zumindest eine weitere Verfahrensvariante zur Verfügung, welche mittels des vorliegenden Anlernens von insbesondere Bahnstrecken vorteilhaft ausgestaltet werden kann.

Mittels der vorliegenden Erfindung können Greifer hinsichtlich ihrer designierten Bahnstrecken optimal angelernt werden, bevor überhaupt eine Inbetriebnahme eines Kaschierverfahrens und/der einer Kaschiervorrichtung erfolgt.

Insofern wird ein Kaschierprozess hinsichtlich Greiferpositionen vorerst lediglich simuliert.

Der Ausdruck "führen" bedeutet im Sinne der Erfindung eine bevorzugt in einem Offset-Modus initiierte Bewegung einer oder mehrerer Greifer, einzeln oder in Gruppen, etwa zu Simulationszwecken.

So sieht eine Verfahrensvariante vor, dass Greifer zumindest teilweise einzeln oder kombiniert jeweils entlang designierter Bahnstrecken, insbesondere designierter Bahnkurven, händisch geführt werden. Beispielsweise werden Greifer zum Anlernen ihrer jeweiligen designierten Arbeitsposition händisch gegriffen und für das Anlernen in die diesbezügliche designierten Arbeitsposition manuell geführt.

Arbeitspositionen können hierbei insbesondere durch Endpunkte von designierten Bahnstrecken oder dergleichen realisiert sein.

Eine noch effektivere und damit bevorzugte Verfahrensvariante sieht vor, dass Greifer zumindest teilweise einzeln oder kombiniert jeweils entlang designierter Bahnstrecken, insbesondere designierter Bahnkurven, mittels eines manuell betätigten Steuerapparats motorisch geführt werden. Hierbei können die Greifer nicht nur mittels Muskelkraft geführt werden, sondern kumulativ oder alternativ manuell motorunterstützt.

Derartige Steuerapparate können unterschiedlichst realisiert sein. Beispielsweise umfassen solche Steuerapparate Eingabegeräte zur manuellen Steuerung von Greifern.

Eine solche manuelle Steuerung kann etwa mit einem Joystickelement, mit Tastenelementen, mit einer berührungsempfindlichen Oberfläche zum Eingeben von Bahnlinien oder dergleichen, und/oder zum Eingeben von Raumkoordinaten oder ähnlichem, bewerkstelligt werden.

Erfindungsgemäß erfolgt das Anlernen in Abhängigkeit von Augmente-Reality-Geräten, mittels welchen ein Kaschierraum visualisiert wird und designierte Bahnstrecken bzw. Bahnkurven zum Kaschieren eines Folienelements auf einem Trägerteil in dem Kaschierraum dargestellt werden.

Besonders präzise können Greifer angelernt werden, wenn Greifer zumindest teilweise einzeln oder kombiniert entlang designierter Bahnstrecken, insbesondere designierter Bahnkurven, geführt und in jeweils designierte Arbeitspositionen hinein geführt werden. Die vorliegenden Verfahren können besonders einfach durchgeführt werden, wenn Greifer folienfrei oder bevorzugt mit gegriffenem Folienelement zumindest teilweise einzeln oder kombiniert entlang jeweils designierter Bahnstrecken, insbesondere designierter Bahnkurven, geführt werden. Insbesondere, wenn die Greifer testweise ein Folienelement greifen, kann das Zusammenspiel der Bewegungsbahnen der Greifer gut erkannt werden.

Es ist zweckmäßig, wenn Greifer zumindest teilweise einzeln oder kombiniert entlang jeweils designierter Bahnstrecken, insbesondere designierter Bahnkurven, geführt werden, um vor dem Greifen eines zu kaschierenden Folienelements designierte Bahnstrecken, insbesondere designierte Bahnkurven, anzulernen. Insbesondere können designierte Bahnstrecken vor einem Kaschieren eines Folienelements auf einem Trägerteil ermittelt und für einen späteren Kaschierprozess angelernt, gespeichert und bereitgehalten werden.

Deshalb ist es vorteilhaft, wenn Greifer zumindest teilweise einzeln oder kombiniert entlang jeweils designierter Bahnstrecken, insbesondere designierter Bahnkurven, geführt werden, um vor Inbetriebnahme des Kaschierverfahrens und/oder einer Kaschiervorrichtung jeweils designierte Bahnstrecken, insbesondere designierte Bahnkurven, der Greifer anzulernen.

Die Verfahren können besonders umfassend durchgeführt werden, wenn Greifer zumindest teilweise einzeln oder kombiniert entlang jeweils designierter Bahnstrecken, insbesondere designierter Bahnkurven, geführt werden, um eine Steuereinrichtung zum Steuern eines Kaschierverfahrens und/oder einer Kaschiervorrichtung, insbesondere zum Steuern von Greifern, hinsichtlich designierter Bahnstrecken, insbesondere designierter Bahnkurven, anzulernen.

Insbesondere mittels einer diesbezüglichen Steuereinrichtung können die angelernten, designierten Bahnstrecken bzw. Bahnkurven nahezu beliebig oft an bzw. in einem Kaschierraum reproduziert werden.

Insbesondere kann durch die Erfindung eine der Kaschiervorrichtung zugeordnete Steuerung zum automatisieren Verfahren der Greifer beim Kaschierprozess hinsichtlich von Greifern abzufahrende Bahnstrecken bzw. Bahnkurven vorab angelernt.

Das Folienelement kann in einem Kaschierprozess besonders schonend kaschiert werden, wenn erste Greifer in Abhängigkeit von Greiferbewegungen entlang designierter Bahnstrecken, insbesondere an designierten Bahnkurven, anderer Greifer ebenfalls entlang designierter Bahnstrecken, insbesondere an designierten Bahnkurven, geführt werden. Hierdurch lassen sich zudem Kollisionen einzelner Greifer innerhalb eines Kaschierraums verhindern.

Bewegungsbahnen von Greifern innerhalb eines Kaschierraums können weiter optimiert werden, wenn Greifer jeweils iterativ entlang einer Vielzahl an Bahnstrecken, insbesondere an designierten Bahnkurven, geführt werden, um designierte Bahnstrecken, insbesondere designierte Bahnkurven, letztendlich anzulernen.

Die Verfahren können nochmals verbessert werden, wenn erste Greifer iterativ entlang einer Vielzahl an Bahnstrecken, insbesondere an designierten Bahnkurven, in Abhängigkeit von Greiferbewegungen entlang designierter Bahnstrecken, insbesondere designierter Bahnkurven, anderer Greifer geführt werden, um letztendlich designierte Bahnstrecken bzw. Bahnkurven anzulernen.

Insbesondere das Zusammenspiel zwischen einer Trägerteilbewegung innerhalb eines Kaschierraums und Greiferbewegungen innerhalb eines Kaschierraums kann weiter verbessert werden, wenn Greifer zumindest teilweise einzeln oder kombiniert in Abhängigkeit von einer Bewegung einer Trägerteilaufnahme, insbesondere eines Trägerteils, jeweils entlang designierter Bahnstrecken, insbesondere designierter Bahnkurven, geführt werden.

Werden Greifer zumindest teilweise einzeln oder kombiniert in Abhängigkeit von einer mehraxialen Raumbewegung einer Trägerteilaufnahme, insbesondere eines Trägerteils, jeweils entlang designierter Bahnstrecken, insbesondere designierter Bahnkurven, geführt, können unerwünschte Foliendehnungen effektiver vermieden werden.

Werden Greifer zumindest teilweise einzeln oder kombiniert in Abhängigkeit von einer Kontur eines Trägerteils entlang jeweils designierter Bahnstrecken geführt, können designierten Bahnstrecken noch exakter angelernt werden. Auch hierdurch können Folienelemente noch präziser zugeschnitten bzw. exakter zugeschnitten bereitgestellt werden, wodurch Folienmaterial noch effektiver eingespart werden kann.

Ferner kann noch eine Verbesserung der vorgeschlagenen Verfahren erzielt werden, wenn zum Anlernen von designierten Bahnstrecken, insbesondere designierter Bahnkurven, Daten, insbesondere 3D-Daten, eines Werkstücks in eine Steuereinrichtung zum Steuern einer Kaschiervorrichtung, insbesondere zum Steuern von Greifern zum Greifen des Folienelements, eingelesen werden.

Liegen etwa Daten bzw. 3D-Daten von einem Folienelement, einem Trägerteil bzw. einem kaschierten Bauteil vor, können die Verfahren unter Zuhilfenahme dieser Informationen noch exakter durchgeführt werden.

Folienzuschnitte für Folienelemente können besonders klein, folienmaterialsparend und damit zielgerichtet hergestellt und für ein Kaschieren bereitgestellt werden, wenn Greifer zumindest teilweise einzeln oder kombiniert bis gegen eine Dichteinrichtung eines Vakuumraums und/oder eines sonstigen Bauteils eines Kaschierwerkzeugs heran geführt werden, um designierte Bahnstrecken, insbesondere designierte Bahnkurven, anzulernen.

Alternativ ist es zweckmäßig, wenn Greifer zumindest teilweise einzeln oder kombiniert bis an eine Dichteinrichtung eines Vakuumraums, insbesondere bis 20 mm oder bis 15 mm, vorzugsweise bis 5 mm oder weniger, an eine Dichteinrichtung eines Vakuumraums, und/oder eines sonstigen Bauteils eines Kaschierwerkzeugs heran geführt werden, um designierte Bahnstrecken, insbesondere designierte Bahnkurven, anzulernen. Durch einen entsprechend geringen Abstand kann die Gefahr einer kritischen Berührung etwa zwischen Dichtschieberelementen der Dichteinrichtung einer Kaschiervorrichtung und Greifern der Kaschiervorrichtung bei einem Kaschierprozess reduziert werden, und dennoch können in einem Kaschierraum angeordnete Greifer noch sehr eng an einem Vakuumraum platziert werden, so dass Folienelemente vorteilhaft klein zugeschnitten werden können.

Eine weitere vorteilhafte Verfahrensvariante sieht vor, dass Greifer zumindest teilweise einzeln oder kombiniert von vordefinierten Ausgangspositionen in jeweils designierte Arbeitspositionen einer Kaschiervorrichtung hinein geführt werden. Im Grunde genommen können die Greifer von jeder beliebigen Startposition in designierte Arbeitspositionen der Kaschiervorrichtung hinein geführt werden.

Spätere anlaufende Kaschierprozesse können jedoch noch betriebssicherer bzw. präziser durchgeführt werden, wenn Greifer aus vordefinierten Ausgangspositionen in jeweils designierte Arbeitspositionen hinein geführt werden.

An dieser Stelle sei noch explizit darauf hingewiesen, dass vorteilhafterweise designierte Bahnstrecken, insbesondere designierte Bahnkurven, offset geführt werden, wodurch ein Anlernen im Sinne der Erfindung im Vorfeld von einem eigentlichen maschinellen und automatisierten Kaschierprozess erfolgen kann.

Denkbar ist auch die Bereitstellung einer Vorrichtung zum Kaschieren eines Folienelements mit Greifern zum Greifen des Folienelements und mit einer Steuereinrichtung zum Steuern eines motorischen Verfahrens von Greifern entlang deren jeweiligen Bahnstrecken, insbesondere entlang Bahnkurven, wobei sich die Vorrichtung durch eine Steuereinrichtung zum Durchführen der hier beschriebenen Verfahren auszeichnet.

Mittels der Kaschiervorrichtung kann einerseits das jeweilige Verfahren zum Anlernen von designierten Bahnstrecken bzw. Bahnkurven von Greifern vor dem eigentlichen Kaschierprozess problemlos durchgeführt und andererseits daran anschließend reale Kaschiervorgänge vorgenommen werden. Mittels der entsprechend eingerichteten Kaschiervorrichtung wird also ein Kaschierprozess hinsichtlich Greiferpositionen vorerst lediglich simuliert.

Der Begriff "Kaschiervorrichtung" beschreibt im Sinne der Erfindung jegliche Vorrichtungen, mittels welchen ein Folienelement auf einem Trägerteil zu einem kaschierten Bauteil aufkaschierbar ist. Eine solche Kaschiervorrichtung betrifft insbesondere eine Vakuumkaschiervorrichtung, kann aber auch andere Kaschiermaschinen betreffen.

Denkbar ist auch die Bereitstellung von einer Teachingstation zum Anlernen von designierten Bahnstrecken, insbesondere von designierten Bahnkurven, für Greifer zum Greifen eines Folienelements, mit Greifern und/oder mit Greiferattrappen, und mit einer Steuereinrichtung zum Steuern der Teachingstation, insbesondere der Greifer und/oder der Greiferattrappen, wobei sich die Teachingstation durch eine Steuereinrichtung zum Durchführen der vorliegenden Verfahren auszeichnet.

Mittels der Teachingstation kann das jeweilige Verfahren zum Anlernen von designierten Bahnstrecken von Greifern unabhängig von einer Kaschiervorrichtung durchgeführt werden und die ermittelten designierten Arbeitspositionen in einer entsprechenden Steuerungseinrichtung, insbesondere einer Kaschiervorrichtung, zum späteren Abrufen hinterlegt werden. Somit ist eine Kaschiervorrichtung speziell nach einem Produktwechsel signifikant schneller wieder einsatzbereit.

Mittels der Teachingstation wird also ein Kaschierprozess hinsichtlich Greiferpositionen innerhalb eines Kaschierraums bevorzugt lediglich simuliert, anschließend aber bevorzugt kein realer Kaschierprozess durchgeführt.

Ferner sind Greifer bei der vorliegenden Teachingstation aufgrund der einfacher gehaltenen Komplexität der Teachingstation leichter zugänglich, wodurch ein manuelles Führen der Greifer entlang designierter Bahnstrecken bzw. Bahnkurven hinein nochmals einfacher durchgeführt werden kann.

Vorzugsweise weist die Teachingstation einen Simulationsraum auf, in welchem die Greifer geführt werden können.

Bevorzugt entspricht der Simulationsraum einem Kaschierraum einer Kaschiervorrichtung.

Um Greifer für ein Führen entlang designierter Bahnstrecken eines Kaschierraums freigängig zu schalten, ist es vorteilhaft, wenn die Steuereinrichtung Mittel zum Freigeben von Greifern umfasst.

Sowohl die Vorrichtung zum Kaschieren als auch die Teachingstation verkörpern beide eine vorteilhafte Anlernvorrichtung zum Anlernen von designierten Bahnstrecken bzw. Bahnkurven eines dazugehörigen Kaschierprozesses, welche beide auch sowohl konstruktiv als auch verfahrenstechnisch einfach in einer Bearbeitungslinie einer Anlage zum Fertigen von kaschierten Bauteilen integriert werden können.

Die Vorrichtung bzw. die Teachingstation können zum Anlernen von designierten Bahnstrecken bzw. Bahnkurven vorteilhaft bedient werden, wenn die Steuereinrichtung einen redundanten Steuerapparat umfasst. Mittels des redundanten Steuerapparats können Greifer beispielsweise unabhängig von in einer Kaschiermaschine verbauten Steuereinrichtungen oder dergleichen entlang designierter Bahnstrecken bzw. Bahnkurven geführt werden.

Beispielsweise weist ein entsprechend eingerichteter redundanter Steuerapparat eine gespiegelte Anzeige einer stationären Ausgabeeinrichtung der Kaschiervorrichtung bzw. der entsprechenden Teachingstation auf.

Besonders hilfreich zum Bedienen der Vorrichtung bzw. der Teachingstation bzw. zum Durchführen der vorliegenden Verfahren ist es, wenn ein solcher redundanter Steuerapparat mobil einsetzbar ist.

Insofern sieht eine vorteilhafte Ausführungsvariante vor, dass die Steuereinrichtung eine mobile Eingabeeinrichtung, insbesondere ein Handheld-Gerät umfasst. Ein geeignetes Handheld-Gerät kann insbesondere ein Laptop, ein Tablett oder dergleichen sein, aber auch ein Smartphone oder ähnliches.

Umfasst die Steuereinrichtung eine Tastatur-Steuerung, eine Touchscreen-Steuerung, eine Joystick-Steuerung oder dergleichen, können Greifer mittels menschlicher Interaktion besonders einfach entlang designierter Bahnstrecken bzw. Bahnkurven motorunterstützt hinein geführt werden.

Jedenfalls erfolgt das Hineinführen von Greifern insbesondere in Arbeitspositionen und/oder entlang designierter Bahnstrecken bzw. Bahnkurven innerhalb eines Kaschierraums im Sinne der Erfindung durch Interaktion eines das jeweilige Verfahren durchführenden Bedieners.

Eine bevorzugte Ausführungsvariante sieht außerdem vor, dass die Steuereinrichtung eine Schnittstelle für die Aufnahme und Verarbeitung von Daten eines zu kaschierenden Trägerteils und/oder eines Folienelements umfasst, wodurch designierte Bahnstrecken bzw. Bahnkurven von der Steuereinrichtung in Abhängigkeit hiervon ermittelter Daten, insbesondere CAD-Daten, vorteilhaft ermittelt und angelernt werden können.

Zweckmäßig ist es, wenn die Schnittstelle Strukturdaten, insbesondere CAD-Daten, Abwicklungsdaten, Freiformoberflächendaten oder dergleichen eines zu kaschierenden Folienelements, eines zu kaschierenden Trägerteils und/oder einer Trägerteilaufnahme aufnehmen und verarbeiten kann. Hierdurch können designierte Bahnstecken bzw. Bahnkurven besonders exakt ermittelt und angelernt werden.

Darüber hinaus ist es ebenfalls vorteilhaft, wenn die Schnittstelle dazu eingerichtet ist, Strukturdaten, insbesondere CAD-Daten, eines Kaschierraums, insbesondere eines Vakuumraums des Kaschierraums, einer Dichtungseinrichtung des Kaschierraums, einer Schneideinrichtung des Kaschierraums oder dergleichen, aufzunehmen und zu verarbeiten. Auch hierdurch können designierte Bahnstecken bzw. Bahnkurven exakter ermittelt und angelernt werden.

Eine weitere sehr vorteilhafte Ausführungsvariante sieht vor, dass designierte Bahnstrecken, insbesondere designierte Bahnkurven, in Abhängigkeit von einem Vakuumraum, insbesondere von einer Außenkontur eines Vakuumraums, ermittelbar und anlernbar sind. Hierdurch können Bahnstrecken bzw. Bahnkurven unter Berücksichtigung von räumlichen Gegebenheiten an einem Kaschierraum einer Kaschiervorrichtung weiter optimiert werden, insbesondere gegenüber einem Vakuumraum einer Kaschiervorrichtung. Zweckmäßigerweise kann der Vakuumraum und speziell eine Außenkontur, bevorzugt eine veränderbare Außenkontur, des Vakuumraums innerhalb des Kaschierraums verlagert, insbesondere höhenverlagert, werden.

Kumulativ oder alternativ ist es vorteilhaft, wenn designierte Bahnstrecken, insbesondere designierte Bahnkurven, in Abhängigkeit von designierten Lagepositionen, insbesondere von veränderbaren Lagepositionen, von Dichtungselementen einer Dichtungseinrichtung und/oder von Schneidelementen einer Scheideeinrichtung ermittelt und angelernt werden. Auch hierdurch können Bahnstrecken bzw. Bahnkurven unter Berücksichtigung von räumlichen Gegebenheiten an einer Dichtungseinrichtung und/oder einer Schneideinrichtung einer Kaschiervorrichtung weiter optimiert werden. Insbesondere an einer Kaschiervorrichtung ist dies von größtem Vorteil, da derartige Einrichtungen bzw. Bauteile oder Bauteilgruppen hiervon in einem Kaschierraum bzw. an einem Vakuumraum äußerst eng beieinander angeordnet sind, so dass hierauf abgestimmte Bahnstrecken bzw. Bahnkurven einen Kaschiervorgang weiter verbessern können.

Eine nochmals weiterentwickelte Ausführungsvariante sieht vor, dass designierte Bahnstrecken, insbesondere designierte Bahnkurven, in Abhängigkeit von einer designierten dynamischen Kaschierbewegung einer Trägerteilaufnahme und/oder eines Trägerteils ermittelbar und anlernbar sind. Hierdurch können ein zu kaschierendes Folienelement und ein hiermit zu kaschierendes Trägerteil innerhalb eines Kaschierraums noch individueller, dynamischer und damit noch besser aufeinander abgestimmt zueinander bewegt werden, so dass ein Kaschiervorgang weiter individualisierbar ist. Somit ist es auch vorteilhaft, wenn designierte Bahnstrecken, insbesondere designierte Bahnkurven, in Abhängigkeit von einem vorzugsweise mehrdimensional manipulierbaren Verfahrweg einer Trägerteilaufnahme bzw. eines Trägerteils ermittelbar bzw. anlernbar sind.

Sind kumulativ oder alternativ designierte Bahnstrecken, insbesondere designierte Bahnkurven, in Abhängigkeit von einem Abstand, insbesondere einem individuell einstellbaren Abstand, zwischen einer Randkontur eines Folienelements und einer Außenkontur eines Vakuumraums, und/oder Dichtungselementen einer Dichtungseinrichtung, und/oder von Schneidelementen einer Scheideeinrichtung ermittelbar und anlernbar, können ebenfalls günstige Folienmaterialeinsparungen und/oder verbesserte Kaschierergebnisse erzielt werden.

Jedenfalls ist es vorteilhaft, wenn designierte Bahnstrecken, insbesondere designierte Bahnkurven, in Abhängigkeit von insbesondere Schließbewegungen eines Kaschierwerkzeugs, vorzugsweise von Schließbewegungen eines Unterwerkzeugs des Kaschierwerkzeugs und/oder eines Oberwerkzeugs des Kaschierwerkzeugs, ermittelbar und anlernbar sind, wodurch insbesondere die vorliegenden Verfahren verbessert werden können.

Denkbar ist auch die Bereitstellung eines Folienelements zum Aufkaschieren auf ein Trägerteil, wobei das Folienelement eine Außenkontur aufweist, und wobei die Außenkontur des Folienelements in Abhängigkeit von Daten einer Trägerteilkontur eines Trägerteils erzeugt ist.

Ist die Außenkontur des Folienelements in Abhängigkeit von einer Trägerteilkontur erzeugt, kann das Folienelement außergewöhnlich folienmaterialsparend und somit exakter und auch knapper konfektioniert werden, wodurch Verschnitt von Folienmaterial erheblich reduziert bzw. idealerweise minimiert werden kann. Hierdurch können kaschierte Bauteile mit einem signifikant reduzierten Materialaufwand und insofern kostensparender und ökonomischer hergestellt werden.

Das Folienelement kann noch exakter auf das zu kaschierende Trägerteil abgestimmt werden, wenn das Folienelement eine umlaufende Randkontur aufweist, wobei die umlaufende Randkontur in Abhängigkeit von Daten einer Trägerteilkontur eines Trägerteils erzeugt ist.

Umfassen die Daten der Trägerteilkontur Strukturdaten, insbesondere CAD-Daten, Abwicklungsdaten, Freiformoberflächendaten oder dergleichen des Trägerteils, kann nicht nur das Folienelement hinsichtlich des Trägerteils knapper konfektioniert werden, sondern es können in Abhängigkeit von solchen Strukturdaten auch designierte Bahnstrecken bzw. Bahnkurven besser im Sinne vorliegender Erfindung ermittelt und angelernt werden.

Es versteht sich, dass Merkmale der vorstehend bzw. in den Ansprüchen beschriebenen Lösungen gegebenenfalls auch kombiniert werden können, um insbesondere die vorliegend erzielbaren Vorteile und Effekte entsprechend kumuliert umsetzen zu können. An dieser Stelle sei noch erwähnt, dass im Rahmen der hier vorliegenden Patentanmeldung der Ausdruck "insbesondere" immer so zu verstehen sei, dass mit diesem Ausdruck ein optionales, bevorzugtes Merkmal eingeleitet wird. Der Ausdruck ist nicht als "und zwar" und nicht als "nämlich" zu verstehen.

Ferner sei darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

Des Weiteren sei noch beansprucht, dass die beschriebenen Verfahren auch noch durch weitere hier beschriebene technische Merkmale, insbesondere durch Merkmale der Vorrichtung, ergänzt werden können, um die Verfahren vorteilhaft weiterzuentwickeln bzw. Verfahrensspezifikationen noch präziser darstellen bzw. formulieren zu können, oder vice versa.

Es ist ferner noch explizit festzuhalten, dass die vorliegende Erfindung sich auf einen realen oder simulierten Kaschierraum bezieht, an bzw. in welchem vorliegende designierte Bahnstrecken bzw. Bahnkurven generiert werden.

Zusätzlich sind weitere Merkmale, Effekte und Vorteile vorliegender Erfindung anhand anliegender Zeichnung und nachfolgender Beschreibung erläutert, in welchen beispielhaft eine Vorrichtung zum Kaschieren eines Folienelements auf einen Trägerteil dargestellt und beschrieben sind.

In der Zeichnung zeigen:
- Figur 1: schematisch eine Ansicht einer Vorrichtung zum Kaschieren eines Folienelements auf einem Trägerteil mit einer Vielzahl an Greifern;
- Figur 2: schematisch eine Aufsicht eine Teachingstation mit einem Kaschierraum und mit einer Vielzahl an Greifern;
- Figur 3: schematisch eine Aufsicht eines Greifers der in den Figuren 1 und 2 gezeigten Vorrichtung bzw. Teachingstation;
- Figur 4: schematisch eine Seitenansicht des in der Figur 3 gezeigten Greifers; und
- Figur 5: schematisch ein erste denkbarer Verfahrensablauf zum Anlernen von designierten Bahnstrecken an einer Kaschiervorrichtung.

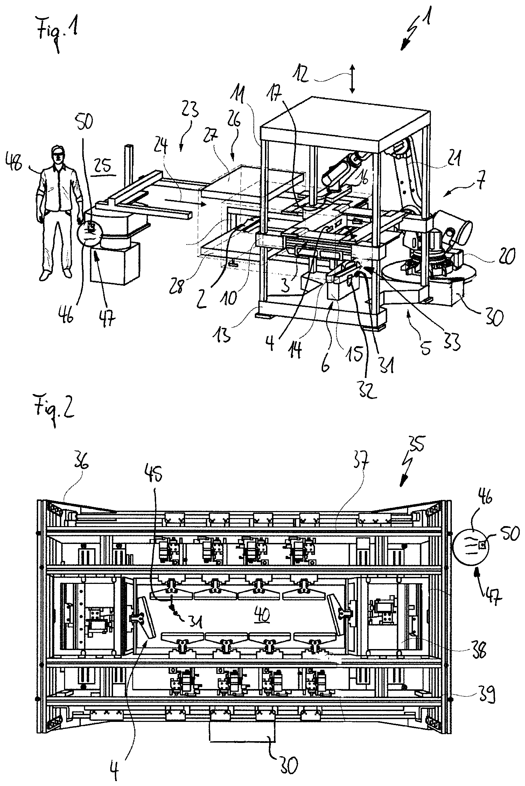

Gemäß der Darstellung nach der Figur 1 ist ein erstes mögliches Ausführungsbeispiel einer Vorrichtung 1 zum Kaschieren eines Folienelements 2 gezeigt.

Die Vorrichtung 1 weist ein Rahmenteil 3 mit einer Vielzahl an motorisch angetriebenen Greifern 4 umfasst. Alternativ können die motorisch angetriebenen Greifer 4 auch unabhängig von einem gemeinsamen Rahmenteil 3 an der Vorrichtung 1 gehaltert sein.

Die Vorrichtung 1 zeichnet sich ferner durch ein Kaschierwerkzeug 5 mit einem Unterwerkzeug 6 und mit einem Oberwerkzeug 7 aus.

Das Kaschierwerkzeug 5 besitzt einen Kaschierraum 8, in welchem ein Kaschiervorgang bzw. ein Kaschierprozess erfolgt.

Das Rahmenteil 3 und damit auch die Greifer 4 sind mittels eines Verfahrmechanismus 10 höhenverstellbar in einem Gestell 11 der Vorrichtung 1 gelagert, so dass das gesamte Rahmenteil 3 entlang einer vertikal Verlagerungsachse 12 der Vorrichtung 1 höhenverstellbar an dem Gestell 11 gelagert ist.

Unterhalb des Rahmenteils 3 an einem Bodenteil 13 des Gestells 11 ist das Unterwerkzeug 6 platziert, wobei das Unterwerkzeug 6 ein oder mehrere Formschalenteile 14 umfasst, welche wiederum auf einem Sockel 15 des Bodenteils 13 angeordnet sind.

Das Oberwerkzeug 7 umfasst eine Trägerteilaufnahme 16, mittels welcher ein oder mehrere zu kaschierenden Trägerteile 17 an dem Oberwerkzeug 7 gehaltert werden können. Das Oberwerkzeug 7 weist des Weiteren eine Robotereinrichtung 20 mit einem mehraxial beweglichen Manipulator 21 auf, an welchem die Trägerteilaufnahme 16 befestigt ist. Mittels des mehraxial beweglichen Manipulators 21 kann die Trägerteilaufnahme 16 bis in den Kaschierraum 8 verbracht werden. Insbesondere kann die Trägerteilaufnahme 16 mehrdimensional innerhalb des Kaschierraums 8 bewegt werden, insbesondere auch höhenverstellbar.

Darüber hinaus verfügt die Vorrichtung 1 noch über eine Zuführ- und/oder Einlegeeinrichtung 23, mittels welcher ein oder mehrere Folienelemente 2 bis in das Rahmenteil 3 eingebracht werden können, und zwar derart, dass das Folienelement 2 sogleich in geöffnete Greifer 4 eingelegt werden kann.

Die Zuführ- und/oder Einlegeeinrichtung 23 verfügt über eine Zuführ- und/oder Einlegestrecke 24, entlang welcher das jeweilige Folienelement 2 ausgehend von einer Beschickungsposition 25 bis in die Greifer 4 zugestellt werden kann.

Die Zuführ- und/oder Einlegeeinrichtung 23 zeichnet sich noch durch wenigstens eine verfahrbare Heizeinheit 26 zum Beheizen des jeweiligen Folienelements 2 außerhalb des Rahmenteil 3 aus. Die verfahrbare Heizeinheit 26 weist zwei Heizeinrichtungen 27 und 28 auf, welche mit dem einzubringenden Folienelement 2 mitfahrend in Richtung Kaschierraum 8 bewegt werden können.

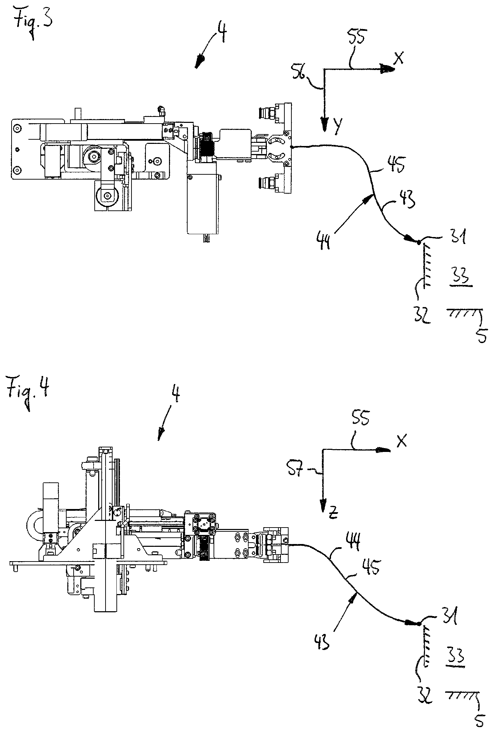

Ferner weist die Vorrichtung 1 eine eine Daten-Schnittstelle umfassende Steuereinrichtung 30 zum motorischen Verfahren der Greifer 4 entlang Bahnstrecken 43 bzw. Bahnkurven 44 und in ihre jeweiligen Arbeitspositionen 31 (hier nur exemplarisch beziffert, siehe auch Figuren 2 bis 4). Die hier eingezeichnete Arbeitsposition 31 kennzeichnet rein exemplarisch eine Endposition (nicht nochmals beziffert) eines Greifers 4 neben einer Dichtungseinrichtung 32 (vgl. Figuren 3 und 4) zum Abdichten eines Vakuumraums 33 (vgl. Figuren 3 und 4) oder neben einem sonstigen hier nicht explizit gezeigten und bezifferten Bauteil des Kaschierwerkzeugs 5. Die gezeigte Bahnstrecke 43 bzw. Bahnkurve 44 ist nur exemplarisch dargestellt.

Eine alternative Anlernvorrichtung zeigt die Figur 2, wobei dort eine Teachingstation 35 zum Anlernen von designierten Arbeitspositionen 31 und Bahnstrecken 43 bzw. Bahnkurven 44 (siehe Figuren 3 und 4) für Greifer 4 zum Greifen eines Folienelements2 darstellt ist. Es versteht sich, dass bei einer solchen Teachingstation 35 auch Greiferattrappen eingesetzt werden können, da an der Teachingstation 35 keine realen Kaschierprozesse erfolgen.

Die Teachingstation 35 weist ein Gestell 36 auf, mittels welchem die Greifer 4 an Längstraversen 37 und Quertraversen 38 eines Rahmenteils 39 mehraxial beweglich gelagert sind.

Das Rahmenteil 39 bzw. das Gestell 36 umbauen einen von oben und unten zugänglichen Simulationsraum 40, in welchem die Greifer 36 geführt werden können, wobei der Simulationsraum 40 dem Kaschierraum 5 der Vorrichtung 1 entspricht.

Die Teachingstation 35 weist eine Steuereinrichtung 30 zum Steuern der Greifer 4 auf, wobei auch diese Steuereinrichtung eine Daten-Schnittstelle (hier ebenfalls nicht gezeigt) im Sinne der Erfindung aufweist.

Mittels der Teachingstation 35 können die Greifer 4 und insbesondere die Steuereinrichtung 30 auf designierte Bahnkurven 43 und Arbeitspositionen 31 angelernt werden, wobei hierzu die Greifer entlang Bewegungsbahnen 45 (nur exemplarisch beziffert, vgl. auch Figuren 3 und 4) bis in die jeweils designierte Arbeitspositionen 31 hinein geführt werden können. Anschließend werden die designierte Arbeitspositionen 31, aber auch die Bewegungsbahnen 45 als Bahnstrecke 43 bzw. Bahnkurve 44 von der Steuereinrichtung 30 gespeichert und stehen als Datensatz für eine Vorrichtung 1 zum Kaschieren eines Folienelements 2 auf einem Trägerteil 17 bereit.

Es versteht sich, dass sowohl mittels der Vorrichtung 1 als auch mittels der Teachingstation 35 unterschiedliche Anlernverfahren durchgeführt werden können.

Hierbei können die Greifer 4 zumindest teilweise einzeln oder kombiniert entlang designierter Bahnstrecken 43 bzw. Bahnkurven 44 händisch geführt und in jeweils designierte Arbeitspositionen 31 händisch hinein geführt werden.

Kumulativ oder alternativ können die Greifer 4 mittels eines manuell betätigten Steuerapparats 46 motorisch zumindest teilweise einzeln oder kombiniert entlang designierter Bahnstrecken 43 bzw. Bahnkurven 44 geführt und in jeweils designierte Arbeitspositionen 31 hinein geführt werden.

Hierzu verfügen sowohl die Vorrichtung 1 als auch die Teachingstation 35 jeweils über einen entsprechenden redundanten Steuerapparat 46, welcher in diesen Ausführungsbeispielen als mobile Eingabeeinrichtung 47 ausgelegt ist. Hierdurch kann ein Bediener 48 (nur in Figur 1 gezeigt) sich frei an der Vorrichtung 1 bzw. der Teachingstation 35 bewegen, während er Greifer 4 manuell führt.

Genauer gesagt ist die Eingabeeinrichtung 47 ein Handheld-Gerät (nicht nochmals beziffert) mit einer Joystick-Steuerung 50, so dass Greifer 4 durch den Bediener 48 mit Hilfe von Antriebsmotoren (nicht beziffert) der Greifer 4 sehr exakt entlang designierter Bahnstrecken 43 bzw. Bahnkurven 44 händisch geführt und in die jeweils designierten Arbeitspositionen 31 manuell hinein führen kann.

Kumulativ oder alternativ können die Greifer 4 mittels einzelner Raumkoordinaten zumindest teilweise einzeln oder kombiniert entlang designierter Bahnstrecken 43 bzw. Bahnkurven 44 geführt und in jeweils designierte Arbeitspositionen 31 hinein geführt werden.

Kumulativ oder alternativ können die Greifer 4 mittels CAD-Daten des Trägerteils 17 und/oder des Folienelements 2 motorisch zumindest teilweise einzeln oder kombiniert entlang designierter Bahnstrecken 43 bzw. Bahnkurven 44 geführt und in jeweils designierte Arbeitspositionen 31 hinein geführt werden. Entsprechende CAD-Daten können mittels der Daten-Schnittstelle der Steuereinrichtung im Sinne der Erfindung verarbeitet werden.

Gemäß den Darstellungen nach den Figuren 3 und 4 ist beispielhaft ein Greifer 4 in seiner Ausgangsposition 54 gezeigt, welcher im Sinne vorliegender Erfindung entlang der Bewegungsbahn 45 in eine designierte Arbeitsposition 31 hinein geführt wird.

Die Figur 3 zeigt hierbei sowohl die horizontale Vorwärtsbewegung 55 (x-Achse) als auch eine horizontale Seitwärtsbewegung 56 (y-Achse) des Greifer 4 entlang der Bewegungsbahn 45 und in die designierte Arbeitsposition 31 hinein, welche in einem späteren realen Kaschierverfahren eine Endposition des Greifers 4 darstellt.

Die Figur 4 zeigt hierzu ergänzend sowohl wieder die horizontale Vorwärtsbewegung 55 (x-Achse) als auch eine vertikale Runterwärtsbewegung 57 (z-Achse) des Greifer 4 entlang der Bewegungsbahn 45 und in die designierte Arbeitsposition 31 hinein.

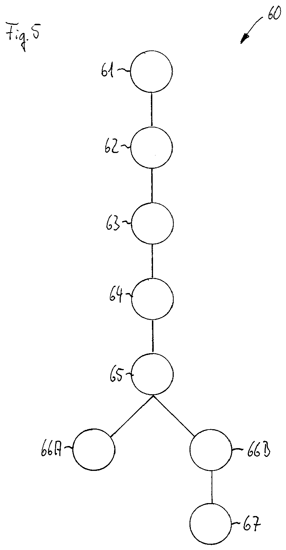

Gemäß der Darstellung nach der Figur 5 ist noch beispielhaft ein Flow-Chart 60 mit einem möglichen Verfahrensablauf eines Anlernens von designierten Bewegungsbahnen 45 und Arbeitspositionen 31 für Greifer 4 der Vorrichtung 1 illustriert.

In einem ersten Verfahrensschritt 61 befinden sich die Greifer 4 in ihrer jeweiligen Ausgangsposition 54, welche vorgegeben oder zufällig sein kann.

In einem zweiten Verfahrensschritt 62 werden Antriebsmotoren oder dergleichen der Greifer 4 freigegeben, so dass die Greifer 4 freigängig sind und im Sinne der Erfindung geführt werden können.

In einem dritten Verfahrensschritt 63 werden Greifer 4 bevorzugt einzeln manuell entlang designierter Bahnstrecken 43 bzw. Bahnkurven 44 geführt und in ihre designierten Arbeitspositionen 31 geführt. Hierbei werden die designierten Bahnstrecken 43 bzw. Bahnkurven 44 getrackt bzw. detektiert.

In einem vierten Verfahrensschritt 64 werden diese designierten Bahnstrecken 43 bzw. Bahnkurven 44 und die designierten Arbeitspositionen 31 von der Steuereinrichtung 30 detektiert und gespeichert. Hierbei ist nunmehr insbesondere die Steuereinrichtung 30 angelernt.

In einem fünften Verfahrensschritt 65 werden die so angelernten Greifer 4 aus ihren angelernten designierten Arbeitspositionen 31 wieder zurückverfahren, etwa in ihre jeweiligen Ausgangsposition 54.

In einem sechsten Verfahrensschritt 66A wird ohne vorherigen Probelauf das eigentliche Kaschierverfahren direkt real gestartet.

Oder in einem alternativen sechsten Verfahrensschritt 66B durchlaufen die angelernten Greifer 4 zuerst einen Probelauf in der Vorrichtung 1 hinsichtlich eines realen Kaschierprozesses.

In einem siebten Verfahrensschritt 67 kann nach erfolgreichem Probelauf das eigentliche Kaschierverfahren real gestartet werden.

Die vorliegend beispielhaft gezeigte Kaschiervorrichtung 1 bzw. Teachingstation 35 sowie das beispielhafte Flow-Chart 60 können bei geeigneter Anpassung alle hier beschriebenen konstruktiven Ausführungsvarianten und Verfahrensvarianten verwirklichen, wobei auf diesbezüglich detailliert beschriebene Figurenbeschreibungen verzichtet ist, um Wiederholungen zu vermeiden.

Es versteht sich, dass es sich bei den vorstehend erläuterten Ausführungsbeispielen lediglich um erste Ausgestaltungen der Erfindung handelt. Insofern beschränken diese Ausführungsbeispiele die Erfindung nicht.

An dieser Stelle sei nochmals explizit darauf hingewiesen, dass Merkmale der vorstehend bzw. in den Ansprüchen und/oder Figuren beschriebenen Lösungen gegebenenfalls auch kombiniert werden können, um die erläuterten oder weitere Merkmale, Effekte und Vorteile entsprechend kumuliert umsetzen bzw. erzielen zu können.

Sämtliche in den Anmeldungsunterlagen offenbarten Merkmale werden als erfindungswesentlich beansprucht, sofern sie einzeln oder in Kombination miteinander gegenüber dem Stand der Technik neu sind.

### LISTE DER VERWENDETEN BEZUGSZEICHEN

- 1: Vorrichtung
- 2: Folienelement
- 3: Rahmenteil
- 4: Greifer
- 5: Kaschierwerkzeug
- 6: Unterwerkzeug
- 7: Oberwerkzeug
- 8: Kaschierraum
- 10: Verfahrmechanismus
- 11: Gestell
- 12: Verlagerungsachse
- 13: Bodenteil
- 14: Formschalenteile
- 15: Sockel
- 16: Trägerteilaufnahme
- 17: Trägerteil
- 20: Robotereinrichtung
- 21: Manipulator
- 23: Zuführ- und/oder Einlegeeinrichtung
- 24: Zuführ- und/oder Einlegestrecke
- 25: Beschickungsposition
- 26: Heizeinheit
- 27: erste Heizeinrichtung
- 28: zweite Heizeinrichtung
- 30: Steuereinrichtung
- 31: Arbeitsposition
- 32: Dichtungseinrichtung
- 33: Vakuumraums
- 35: Teachingstation
- 36: Gestell
- 37: Längstraversen
- 38: Quertraversen
- 39: anderes Rahmenteil
- 40: Simulationsraum
- 43: Bahnstrecken
- 44: Bahnkurven
- 45: Bewegungsbahnen
- 46: Steuerapparat
- 47: mobile Eingabeeinrichtung bzw. Handheld-Gerät
- 48: Bediener
- 50: Joystick-Steuerung
- 54: Ausgangsposition
- 55: horizontale Vorwärtsbewegung bzw. x-Achse
- 56: horizontale Seitwärtsbewegung bzw. y-Achse
- 57: vertikale Runterwärtsbewegung bzw. z-Achse
- 60: Flow-Chart
- 61: erster Verfahrensschritt
- 62: zweiter Verfahrensschritt
- 63: dritter Verfahrensschritt
- 64: vierter Verfahrensschritt
- 65: fünfter Verfahrensschritt
- 66: sechster Verfahrensschritt
- 67: siebter Verfahrensschritt

## Patentansprüche

1. Verfahren zum Anlernen einer Kaschiervorrichtung (1) zum Kaschieren eines Folienelements (2) auf einem Trägerteil (17), bei welchem designierte Bahnstrecken (43), insbesondere designierte Bahnkurven (44), entlang welcher Greifer (4) zum Greifen des Folienelements (2), insbesondere wenigstens ein Greiferbackenelement hiervon, später zum Kaschieren des Folienelements (2) verfahren werden, durch manuelle Betätigung von Greifern (4) angelernt werden, **dadurch gekennzeichnet, dass** die Greifer (4) zum Anlernen manuell entlang der designierten Bahnstrecken (43), insbesondere der designierten Bahnkurven (44), in ihre designierten Arbeitspositionen (31) geführt werden und dabei die designierten Bahnstrecken (43), insbesondere die designierten Bahnkurven (44), detektiert werden, und dass das Anlernen in Abhängigkeit von Augmented-Reality-Geräten erfolgt, mittels welchen ein Kaschierraum visualisiert wird und designierte Bahnstrecken (43) bzw. Bahnkurven (44) zum Kaschieren des Folienelements (2) auf dem Trägerteil (17) in dem Kaschierraum dargestellt werden.

2. Verfahren zum Anlernen einer Kaschiervorrichtung (1) zum Kaschieren eines Folienelements (2) auf einem Trägerteil (17) nach Anspruch 1, ***dadurch gekennzeichnet*, dass** die Greifer zu vorbestimmten Raumkoordinaten händisch hin geführt werden.

3. Verfahren zum Anlernen einer Kaschiervorrichtung (1), insbesondere zum Kaschieren eines Folienelements (2) auf einem Trägerteil (17), nach einem der Ansprüche 1 oder 2, bei welchem das Folienelement (2) mittels Greifer (4) gegriffen wird, und bei welchem Greifer (4), jeweils entlang deren Bahnstrecken (43), insbesondere entlang deren Bahnkurven (44) motorisch verfahren werden, um das Folienelement (2) für einen Kaschiervorgang gegenüber dem Trägerteil (17) zu positionieren, ***dadurch gekennzeichnet*, dass** Greifer (4) zumindest teilweise einzeln oder kombiniert entlang jeweils designierter Bahnstrecken (43), insbesondere entlang designierter Bahnkurven (44), geführt werden, um designierte Bahnstrecken (43), insbesondere designierte Bahnkurven (44) anzulernen.

4. Verfahren zum Anlernen einer Kaschiervorrichtung, insbesondere zum Ein- oder Umrüsten einer Kaschiervorrichtung (1) zum Kaschieren eines Folienelements (2) mit Greifern (4) zum Greifen des Folienelements (2), nach einem der Ansprüche 1 oder 2, bei welchem zum Ein- oder Umrüsten bei der Kaschiervorrichtung (1) eingesetzte Greifer (4) zumindest teilweise einzeln oder kombiniert jeweils entlang designierter Bahnstrecken (43), insbesondere entlang designierter Bahnkurven (44), geführt werden, um designierte Bahnstrecken (43), insbesondere designierte Bahnkurven (44) anzulernen.

5. Verfahren nach einem der Ansprüche 1 bis 4, ***dadurch gekennzeichnet*, dass** Greifer (4) zumindest teilweise einzeln oder kombiniert jeweils entlang designierter Bahnstrecken (43), insbesondere designierter Bahnkurven (44), händisch geführt werden, wobei Greifer (4) insbesondere händisch greifbar sind.

6. Verfahren nach einem der Ansprüche 1 bis 5, ***dadurch gekennzeichnet*, dass** Greifer (4) zumindest teilweise einzeln oder kombiniert jeweils entlang designierter Bahnstrecken (43), insbesondere designierter Bahnkurven (44), mittels eines manuell betätigten Steuerapparats (46) motorisch geführt werden, wobei die Greifer (4) insbesondere kumulativ zu dem händischen Führen manuell motorgestützt geführt werden.

7. Verfahren nach einem der Ansprüche 1 bis 6, ***dadurch gekennzeichnet*, dass** Greifer (4) zumindest teilweise einzeln oder kombiniert entlang designierter Bahnstrecken (43), insbesondere designierter Bahnkurven (44), geführt und in jeweils designierte Arbeitspositionen (31) hinein geführt werden.

8. Verfahren nach einem der Ansprüche 1 bis 7, ***dadurch gekennzeichnet*, dass** Greifer (4) folienfrei oder mit gegriffenem Folienelement (2) zumindest teilweise einzeln oder kombiniert entlang designierter Bahnstrecken (43), insbesondere designierter Bahnkurven (44), geführt werden.

9. Verfahren nach einem der Ansprüche 1 bis 8, ***dadurch gekennzeichnet*, dass** Greifer (4) zumindest teilweise einzeln oder kombiniert jeweils entlang designierter Bahnstrecken (43), insbesondere designierter Bahnkurven (44), geführt werden, um vor Inbetriebnahme der Kaschiervorrichtung (1) jeweils designierte Bahnstrecken (43), insbesondere designierte Bahnkurven (44), der Greifer (4) anzulernen.

10. Verfahren nach einem der Ansprüche 1 bis 9, ***dadurch gekennzeichnet*, dass** Greifer (4) zumindest teilweise einzeln oder kombiniert jeweils entlang designierter Bahnstrecken (43), insbesondere designierter Bahnkurven (44), geführt werden, um eine Steuereinrichtung (30) zum Steuern der Kaschiervorrichtung (1), insbesondere zum Steuern von Greifern (4), hinsichtlich designierter Bahnstrecken (43), insbesondere designierter Bahnkurven (44), anzulernen.

11. Verfahren nach einem der Ansprüche 1 bis 10, ***dadurch gekennzeichnet*, dass** erste Greifer (4) in Abhängigkeit von Greiferbewegungen entlang designierter Bahnstrecken (43), insbesondere designierter Bahnkurven (44), anderer Greifer (4) ebenfalls entlang designierter Bahnstrecken (43), insbesondere designierter Bahnkurven (44), geführt werden.

12. Verfahren nach einem der Ansprüche 1 bis 11, ***dadurch gekennzeichnet*, dass** Greifer (4) jeweils iterativ entlang einer Vielzahl an designierten Bahnstrecken (43), insbesondere an designierten Bahnkurven (44), geführt werden, um designierte Bahnstrecken (43), insbesondere designierte Bahnkurven (44), letztendlich anzulernen.

13. Verfahren nach einem der Ansprüche 1 bis 12, ***dadurch gekennzeichnet*, dass** erste Greifer (4) iterativ entlang einer Vielzahl an Bahnstrecken (43), insbesondere an designierten Bahnkurven (44), in Abhängigkeit von Greiferbewegungen entlang designierter Bahnstrecken (43), insbesondere designierter Bahnkurven (44), anderer Greifer (4) geführt werden, um letztendlich designierte Bahnstrecken (43), insbesondere designierter Bahnkurven (44), anzulernen.

14. Verfahren nach einem der Ansprüche 1 bis 13, ***dadurch gekennzeichnet*, dass** Greifer (4) zumindest teilweise einzeln oder kombiniert in Abhängigkeit von einer Bewegung, vorzugsweise einer mehraxialen Raumbewegung, einer Trägerteilaufnahme (16), insbesondere eines Trägerteils (17) oder in Abhängigkeit von einer Kontur eines Trägerteils (17) jeweils entlang designierter Bahnstrecken (43), insbesondere designierter Bahnkurven (44), geführt werden.

## Claims

1. Process for teaching a laminating device (1) for laminating a foil element (2) on a carrier part (17), in which designated path sections (43), in particular designated path curves (44), along which grippers (4) for gripping the foil element (2), in particular at least one gripper jaw element thereof, are later moved for laminating the foil element (2), are taught by manual actuation of grippers (4), **characterized in that** the grippers (4) are manually guided along the designated path sections (43), in particular the designated path curves (44), into their designated working positions (31) for teaching, **characterized in that** the grippers (4) are guided manually along the designated path sections (43), in particular the designated path curves (44), into their designated working positions (31) for teaching, and the designated path sections (43), in particular the designated path curves (44), are detected in the process, and **in that** the teaching takes place as a function of augmented reality devices, by means of which a laminating space is visualized and designated path sections (43) or path curves (44) are detected for laminating, path curves (44) for laminating the foil element (2) on the carrier part (17) are displayed in the laminating space.

2. Process for teaching a laminating device (1) for laminating a foil element (2) on a carrier part (17) according to claim 1, ***characterized in* that** the grippers are guided manually to predetermined spatial coordinates.

3. Process for teaching a laminating device (1), in particular for laminating a foil element (2) on a carrier part (17), according to one of claims 1 or 2, in which the foil element (2) is gripped by means of grippers (4), and in which grippers (4) are each moved by motor along their path sections (43), in particular along their path curves (44), in order to position the foil element (2) relative to the carrier part (17) for a laminating operation, ***characterized in* that** grippers (4) are guided at least partially individually or in combination along respectively designated path sections (43), in particular along designated path curves (44), in order to teach in designated path sections (43), in particular designated path curves (44).

4. Process for teaching a laminating device, in particular for setting up or modifying a laminating device (1) for laminating a foil element (2) with grippers (4) for gripping the foil element (2), according to one of claims 1 or 2, in which grippers (4) used for setting up or modifying in the laminating device (1) are guided at least partially individually or in combination along designated path sections (43), in particular along designated path curves (44), in order to teach in designated path sections (43), in particular designated path curves (44).

5. Process according to one of claims 1 to 4, ***characterized in* that** grippers (4) are guided manually at least partially individually or in combination along designated path sections (43), in particular designated path curves (44), wherein grippers (4) can be gripped manually in particular.

6. Process according to one of claims 1 to 5, ***characterized in* that** grippers (4) are at least partially guided individually or in combination along designated path sections (43), in particular designated path curves (44), by means of a manually actuated control apparatus (46), the grippers (4) being guided manually with motor support, in particular cumulatively to the manual guidance.

7. Process according to one of claims 1 to 6, ***characterized in* that** grippers (4) are guided at least partially individually or in combination along designated path sections (43), in particular designated path curves (44), and are guided into respectively designated working positions (31).

8. Process according to one of claims 1 to 7, ***characterized in* that** grippers (4) are guided without foil or with gripped foil element (2) at least partially individually or in combination along designated path sections (43), in particular designated path curves (44).

9. Process according to one of claims 1 to 8, ***characterized in* that** grippers (4) are guided at least partially individually or in combination along designated path sections (43), in particular designated path curves (44), in order to teach in designated path sections (43), in particular designated path curves (44), of the grippers (4) before the laminating device (1) is put into operation.

10. Process according to one of claims 1 to 9, ***characterized in* that** grippers (4) are guided at least partially individually or in combination along designated path sections (43), in particular designated path curves (44), in order to teach a control device (30) for controlling the laminating device (1), in particular for controlling grippers (4), with regard to designated path sections (43), in particular designated path curves (44).

11. Process according to one of claims 1 to 10, ***characterized in* that** first grippers (4) are guided along designated path sections (43), in particular designated path curves (44), as a function of gripper movements, other grippers (4) are also guided along designated path sections (43), in particular designated path curves (44).

12. Process according to one of claims 1 to 11, ***characterized in* that** grippers (4) are each guided iteratively along a plurality of designated path sections (43), in particular designated path curves (44), in order to ultimately teach designated path sections (43), in particular designated path curves (44).

13. Process according to one of claims 1 to 12, ***characterized in* that** the first gripper (4) is guided iteratively along a plurality of path sections (43), in particular on designated path curves (44), as a function of gripper movements along designated path sections (43), in particular designated path curves (44), of other grippers (4), in order to ultimately teach designated path sections (43), in particular designated path curves (44).

14. Process according to one of claims 1 to 13, ***characterized in* that** grippers (4) are guided at least partially individually or in combination as a function of a movement, preferably a multiaxial spatial movement, of a carrier part holder (16), in particular of a carrier part (17), or as a function of a contour of a carrier part (17), in each case along designated path sections (43), in particular designated path curves (44).

## Revendications

1. Procédé d'apprentissage d'un dispositif de contrecollage (1) pour le contrecollage d'un élément de film (2) sur une partie de support (17), dans lequel des trajets de trajectoire désignés (43), en particulier des courbes de trajectoire désignées (44), le long desquels des préhenseurs (4) sont déplacés pour saisir l'élément de film (2), en particulier au moins un élément de mâchoire de préhension de celui-ci, ultérieurement pour le contrecollage de l'élément de film (2), sont appris par actionnement manuel des préhenseurs (4), **caractérisé en ce que** les préhenseurs (4) sont actionnés manuellement, **en ce que** les pinces (4) sont guidées manuellement pour l'apprentissage le long des trajets de bande désignés (43), en particulier des courbes de bande désignées (44), dans leurs positions de travail désignées (31) et les trajets de bande désignés (43), en particulier les courbes de bande désignées (44), sont alors détectés, et **en ce que** l'apprentissage s'effectue en fonction d'appareils de réalité augmentée au moyen desquels un espace de contrecollage est visualisé et des trajets de bande désignés (43) ou des courbes de bande désignées (44) sont détectés. Les courbes de trajectoire (44) pour le contrecollage de l'élément de film (2) sur la partie de support (17) sont représentées dans l'espace de contrecollage.

2. Procédé d'apprentissage d'un dispositif de contrecollage (1) pour le contrecollage d'un élément de film (2) sur une partie de support (17) selon la revendication 1, ***caractérisé en* ce que** les pinces sont guidées manuellement vers des coordonnées spatiales prédéterminées.

3. Procédé d'apprentissage d'un dispositif de contrecollage (1), en particulier pour le contrecollage d'un élément de film (2) sur une partie de support (17), selon l'une des revendications 1 ou 2, dans lequel l'élément de film (2) est saisi au moyen de pinces (4), et dans lequel des pinces (4) sont déplacées par moteur respectivement le long de leurs trajectoires (43), en particulier le long de leurs courbes de trajectoire (44), afin de positionner l'élément de film (2) pour une opération de contrecollage par rapport à la partie de support (17), ***caractérisé en* ce que** des préhenseurs (4) sont guidés au moins partiellement individuellement ou de manière combinée le long de trajets de trajectoire (43) respectivement désignés, en particulier le long de courbes de trajectoire (44) désignées, afin d'apprendre des trajets de trajectoire (43) désignés, en particulier des courbes de trajectoire (44) désignées.

4. Procédé pour l'apprentissage d'un dispositif de contrecollage, en particulier pour le montage ou le rééquipement d'un dispositif de contrecollage (1) pour le contrecollage d'un élément en feuille (2) avec des pinces (4) pour la préhension de l'élément en feuille (2), selon l'une des revendications 1 ou 2, dans lequel, pour le montage ou le rééquipement, des pinces (4) utilisées dans le dispositif de contrecollage (1) sont guidées au moins partiellement, individuellement ou en combinaison, respectivement le long de trajets de trajectoire désignés (43), en particulier le long de courbes de trajectoire désignées (44), afin d'apprendre des trajets de trajectoire désignés (43), en particulier des courbes de trajectoire désignées (44).

5. Procédé selon l'une des revendications 1 à 4, ***caractérisé* en ce que** des préhenseurs (4) sont guidés manuellement, au moins partiellement, individuellement ou en combinaison, respectivement le long de trajets de trajectoire désignés (43), en particulier de courbes de trajectoire désignées (44), des préhenseurs (4) pouvant être saisis en particulier manuellement.

6. Procédé selon l'une des revendications 1 à 5, ***caractérisé* en ce que** des préhenseurs (4) sont guidés par moteur au moins en partie individuellement ou en combinaison respectivement le long de trajets de bande désignés (43), en particulier de courbes de bande désignées (44), au moyen d'un appareil de commande (46) actionné manuellement, les préhenseurs (4) étant guidés manuellement à l'aide d'un moteur en particulier de manière cumulative au guidage manuel.

7. Procédé selon l'une des revendications 1 à 6, ***caractérisé* en ce que** des pinces (4) sont guidées au moins partiellement, individuellement ou en combinaison, le long de trajectoires désignées (43), en particulier de courbes de trajectoire désignées (44), et sont amenées dans des positions de travail (31) respectivement désignées.

8. Procédé selon l'une des revendications 1 à 7, ***caractérisé* en ce que** des pinces (4) sans film ou avec un élément de film (2) saisi sont guidées au moins partiellement, individuellement ou en combinaison, le long de trajectoires désignées (43), en particulier de courbes de trajectoire désignées (44).

9. Procédé selon l'une des revendications 1 à 8, ***caractérisé* en ce que** des pinces (4) sont guidées au moins partiellement, individuellement ou en combinaison, respectivement le long de trajets de bande (43) désignés, en particulier de courbes de bande (44) désignées, afin d'apprendre, avant la mise en service du dispositif de contrecollage (1), des trajets de bande (43) respectivement désignés, en particulier des courbes de bande (44) désignées, des pinces (4).

10. Procédé selon l'une des revendications 1 à 9, ***caractérisé* en ce que** des pinces (4) sont guidées au moins partiellement individuellement ou de manière combinée respectivement le long de trajets de trajectoire désignés (43), en particulier de courbes de trajectoire désignées (44), afin d'apprendre à un dispositif de commande (30) à commander le dispositif de contrecollage (1), en particulier à commander des pinces (4), en ce qui concerne des trajets de trajectoire désignés (43), en particulier des courbes de trajectoire désignées (44).

11. Procédé selon l'une des revendications 1 à 10, ***caractérisé* en ce que** des premiers préhenseurs (4) sont guidés en fonction de mouvements de préhension le long de trajectoires désignées (43), en particulier de courbes de trajectoire désignées (44), d'autres préhenseurs (4) sont également guidés le long de trajectoires désignées (43), en particulier de courbes de trajectoire désignées (44).

12. Procédé selon l'une des revendications 1 à 11, ***caractérisé* en ce que** des préhenseurs (4) sont respectivement guidés de manière itérative le long d'une pluralité de trajets de bande désignés (43), en particulier de courbes de bande désignées (44), afin d'apprendre finalement des trajets de bande désignés (43), en particulier des courbes de bande désignées (44).

13. Procédé selon l'une des revendications 1 à 12, ***caractérisé* en ce que** des premiers préhenseurs (4) sont guidés de manière itérative le long d'une pluralité de trajets de bande (43), en particulier de courbes de bande désignées (44), en fonction de mouvements de préhension le long de trajets de bande désignés (43), en particulier de courbes de bande désignées (44), d'autres préhenseurs (4), afin d'apprendre finalement des trajets de bande désignés (43), en particulier des courbes de bande désignées (44).

14. Procédé selon l'une des revendications 1 à 13, ***caractérisé* en ce que** des pinces (4) sont guidées au moins en partie individuellement ou de manière combinée en fonction d'un mouvement, de préférence d'un mouvement spatial multiaxial, d'un logement de pièce de support (16), en particulier d'une pièce de support (17), ou en fonction d'un contour d'une pièce de support (17), respectivement le long de trajectoires désignées (43), en particulier de courbes de trajectoire désignées (44).
